# EUROPEAN PATENT APPLICATION

(11) **EP 1 863 111 A1**
(43) Date of publication of application: **05.12.2007**
(21) Application number: 06729682.2
(22) Date of filing: 22.03.2006
(51) Int. Cl.: H01M 8/02, H01M 8/06, H01M 8/10

(54) **FUEL CELL**

(30) Priority: 23.03.2005 JP 2005084464
(71) Applicant: KABUSHIKI KAISHA TOSHIBA, Tokyo 105-8001 (JP)
(72) Inventor: YAJIMA, Akira, Minato-ku Tokyo 105-8001 (JP); TAKIZAWA, Yumiko, Minato-ku Tokyo 105-8001 (JP); SATOH, Asako, Minato-ku Tokyo 105-8001 (JP); KAN, Hirofumi, Minato-ku Tokyo 105-8001 (JP)
(74) Representative: Henkel, Feiler & Hänzel
(86) International application number: PCT/JP2006/305715
(87) International publication number: WO 2006/101132

(57) **Abstract**

A fuel cell comprises a proton conductive membrane (6), an anode catalyst layer (3) provided on one surface of the proton conductive membrane (6), and a cathode catalyst layer (2) provided partly on another surface of the proton conductive membrane (6), wherein water generated in the cathode catalyst layer (2) is supplied to the anode catalyst layer (3) through the proton conductive membrane (6), and the fuel cell further comprises a water-diffusing portion (2a) which is provided on the another surface of the proton conductive membrane (6) and is in contact with the cathode catalyst layer (2).

## Description

### Technical Field

The present invention relates to a fuel cell in which water produced in a cathode catalyst layer is supplied to an anode catalyst layer through a proton conductive membrane.

### Background Art

Nowadays, in line with developments in semiconductor technology, various electronic devices such as personal computers and cellular telephones have become compact, and attempts are being made to use fuel cells in these compact devices. Fuel cells are advantageous in that to generate electricity merely requires the supply of fuel and an oxidizer, and continuous generation of electricity is possible simply by replenishing the fuel. Therefore, they are ideal systems for powering portable electronic devices if they can be made compact. In particular, direct-methanol fuel cells (DMFCs), which use methanol having a high energy density as fuel, can draw current directly from methanol on an electrode catalyst. These cells, therefore, need no reformer and can be compact. Also, the handling of fuel in DMFCs is easier than in fuel cells that use hydrogen gas fuel, and therefore, DMFCs are promising power sources for compact devices.

As to a method of supplying fuel for DMFCs, there are known gas-supply-type DMFCs, in which liquid fuel is gasified and the gasified fuel fed to the fuel cell by a blower; liquid-supply-type DMFCs, in which liquid fuel is fed to a fuel cell by a pump; and internal-gasifying-type DMFCs, in which liquid fuel is gasified in a cell to supply the fuel to an anode as disclosed in Japanese Patent No. 3413111.

Jpn. Pat. Appln. KOKAI Publication No. 5-190184 relates to a fuel cell using hydrogen gas fuel. This publication discloses that, in order to promote supply of water to an electrolyte membrane, a membrane electrode assembly includes a part where an electrode catalyst layer is formed and a part only including one solid polymer electrolyte membrane. And the publication discloses that the solid polymer electrolyte membrane is supplied water, which is discharged from the system by water repellency of the electrode catalyst layer.

### Disclosure of Invention

It is an object of the present invention to improve the output performance of a fuel cell in which water generated in a cathode catalyst layer is supplied to an anode catalyst layer through a proton conductive membrane.

According to an aspect of the present invention, there is provided a fuel cell comprising:
a proton conductive membrane;
an anode catalyst layer provided on one surface of the proton conductive membrane; and
a cathode catalyst layer provided partly on another surface of the proton conductive membrane,
wherein water generated in the cathode catalyst layer is supplied to the anode catalyst layer through the proton conductive membrane, and
the fuel cell further comprises a water-diffusing portion which is provided on the another surface of the proton conductive membrane and is in contact with the cathode catalyst layer.

According to another aspect of the present invention, there is provided a fuel cell comprising:
a proton conductive membrane;
an anode catalyst layer provided on one surface of the proton conductive membrane;
a cathode catalyst layer which is provided on another surface of the proton conductive membrane and faces the anode catalyst layer through the proton conductive membrane; and
a water-diffusing portion which is provided on the another surface of the proton conductive membrane and is in contact with the cathode catalyst layer, and the water-diffusing portion supplying water generated in the cathode catalyst layer to the anode catalyst layer through the proton conductive membrane.

According to another aspect of the present invention, there is provided a fuel cell comprising:
a proton conductive membrane;
an anode catalyst layer provided on one surface of the proton conductive membrane;
a cathode catalyst layer which is provided on another surface of the proton conductive membrane and faces the anode catalyst layer through the proton conductive membrane; and
a water-diffusing portion which is in contact with the cathode catalyst layer and penetrates through the proton conductive membrane, and the water-diffusing portion supplying water generated in the cathode catalyst layer to the anode catalyst layer.

### Brief Description of Drawings

FIG. 1 is a typical sectional view showing a direct-methanol fuel cell according to a first embodiment of the present invention.
FIG. 2 is a typical view showing an MEA in the direct-methanol fuel cell of FIG. 1.
FIG. 3 is a typical view showing an MEA of a direct-methanol fuel cell according to a second embodiment of the present invention.
FIG. 4 is a typical view showing an MEA of a direct-methanol fuel cell according to a third embodiment of the present invention.
FIG. 5 is a typical view showing an MEA of a direct-methanol fuel cell according to a fourth embodiment of the present invention.
FIG. 6 is a curve showing a variation of cell voltage with time in each fuel cell obtained in Example 1 and Comparative Example 1.
FIG. 7 is a typical view showing an MEA of a direct-methanol fuel cell according to a fifth embodiment of the present invention.

### Best Mode for Carrying Out the Invention

In a fuel cell according to the embodiment of the present invention, the situation where the moisture retention of the cathode catalyst layer is larger than that of the anode catalyst layer is produced to supply water generated in the cathode catalyst layer to the anode catalyst layer through the proton conductive membrane by utilizing an osmosis phenomenon. The moisture content on the cathode side can be made larger than that on the anode side by, for example, using a moisture retentive plate preventing the evaporation of water generated in the cathode catalyst layer or using liquid fuel having a high methanol content.

A fuel cell in which water is supplied from the cathode to the anode such as those mentioned above has the problem that, if power generation is continued for a long time, pores in the cathode catalyst layer are clogged with water, so that the diffusibility of an oxidizing gas (for example, air) in the cathode catalyst layer is deteriorated, leading to a deterioration in power generation performance.

According to the embodiment of the present invention, water produced in the cathode catalyst layer can be absorbed in a water-diffusing portion by forming the water-diffusing portion on the opposite side of the proton conductive membrane such that the water-diffusing portion is in contact with the cathode catalyst layer. Therefore, the clogging of pores in the cathode catalyst layer with water can be limited to thereby suppress a reduction in diffusibility of an oxidizing gas along with power generation.

Also, water retained in the water-diffusing portion is diffused into the proton conductive membrane by a capillary phenomenon and then supplied to the anode catalyst layer. Therefore, the loss of water by vaporization during the course of diffusion can be limited and a plenty of water can be continuously supplied to the anode catalyst layer. This makes it possible to obtain high output by using liquid fuel having a high concentration.

In the above-described Jpn. Pat. Appln. KOKAI Publication No. 5-190184, clearances are formed in the electrode catalyst layer and water is stored in these clearances to supply water to the solid polymer electrolyte membrane. However, there is the problem that water tends to vaporize due to a rise in temperature caused by a generating reaction before it is supplied to the electrolyte membrane and it is therefore difficult to supply a plenty of water to the solid polymer electrolyte membrane, bringing about unstable water supply.

Since water produced in the cathode catalyst layer is supplied to the anode catalyst layer through the proton conductive membrane in the embodiment of the present invention, it is desired to use gasified fuel obtained by gasifying liquid fuel. Also, the embodiment of the present invention is preferably applied to an internal-gasifying-type fuel cell provided with gasifying fuel means which supplies a gasified component of liquid fuel to the anode catalyst layer. Examples of the liquid fuel to be gasified may include an aqueous methanol solution and pure methanol. The concentration of the aqueous methanol solution is preferably increased to a high concentration exceeding 50 mol%. Also, the purity of pure methanol is preferably 95% by weight or more and 100% by weight or less. This ensures that a compact fuel cell having a high energy density and high output performance can be realized. In this case, the liquid fuel is not always limited to methanol fuel but may be ethanol fuel such as an aqueous ethanol solution and pure ethanol, propanol fuel such as an aqueous propanol solution and pure propanol, glycol fuel such as an aqueous glycol solution and pure glycol, dimethyl ether, formic acid or other liquid fuels. In any case, liquid fuel corresponding to a fuel cell is stored.

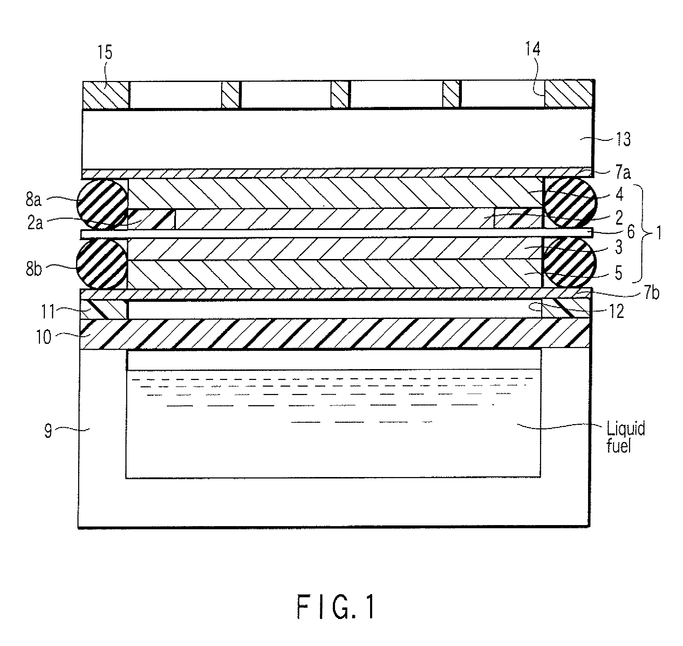

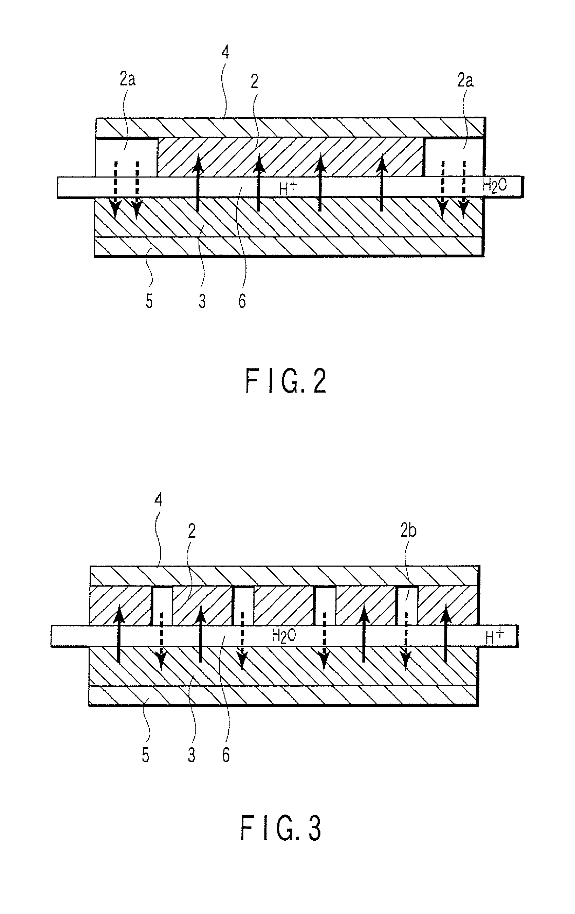

A first embodiment of an internal-gasifying-type fuel cell provided with a moisture retentive plate is shown in FIGS. 1 and 2.

FIG. 1 is a typical sectional view showing a direct-methanol fuel cell according to the first embodiment of the present invention. FIG. 2 is a typical view showing an MEA of the direct-methanol fuel cell of FIG. 1.

As shown in FIGS. 1 and 2, a membrane electrode assembly (MEA) 1 is provided with a cathode (air electrode) composed of a cathode catalyst layer 2 and a cathode gas diffusing layer 4, an anode (fuel electrode) composed of an anode catalyst layer 3 and an anode gas diffusing layer 5, and a proton conductive electrolyte membrane 6 disposed between the cathode catalyst layer 2 and the anode catalyst layer 3.

The cathode catalyst layer 2 is formed in the vicinity of the center of the surface of the proton conductive membrane 6 on the side opposite to the surface on which the anode catalyst layer 3 is formed. Also, a water-diffusing portion 2a having a rectangular frame form is formed on the proton conductive membrane 6 and covers the periphery of the cathode catalyst layer 2.

The cathode gas diffusing layer 4 is laminated on the cathode catalyst layer 2 and the water-diffusing portion 2a. On the other hand, the anode gas diffusing layer 5 is laminated on the anode catalyst layer 3. The cathode gas diffusing layer 4 serves to supply an oxidizer uniformly to the cathode catalyst layer 2 and doubles as a current collector of the cathode catalyst layer 2. On the other hand, the anode gas diffusing layer 5 serves to supply fuel uniformly to the anode catalyst layer 3 and doubles as a current collector of the anode catalyst layer 3. A cathode conductive layer 7a and an anode conductive layer 7b are in contact with the cathode gas diffusing layer 4 and the anode gas diffusing layer 5, respectively. A porous layer (for example, a mesh) made of a metal material such as gold may be used for both the cathode conductive layer 7a and the anode conductive layer 7b.

A cathode seal material 8a having a rectangular frame form is positioned between the cathode conductive layer 7a and the proton conductive electrolyte membrane 6 and also encloses the peripheries of the water-diffusing portion 2a and cathode gas diffusing layer 4. On the other hand, an anode seal material 8b having a rectangular frame form is positioned between the anode conductive layer 7b and the proton conductive electrolyte membrane 6 and also encloses the peripheries of the anode catalyst layer 3 and the anode gas diffusing layer 5. The cathode seal material 8a and the anode seal material 8b are O-rings for preventing leakage of the fuel and oxidizer respectively from the membrane electrode assembly 1.

A liquid fuel tank 9 is disposed below the membrane electrode assembly 1. Liquid methanol or an aqueous methanol solution is stored in the liquid fuel tank 9. Gasified fuel supply means which supplies the gasified component of liquid fuel to the anode catalyst layer 3 is disposed above the liquid fuel tank 9. The gasified fuel supply means is provided with a gas-liquid separating membrane 10 which can only transmit the gasified component of liquid fuel but cannot transmit the liquid fuel. Here, the gasified component of liquid fuel means methanol vapor when liquid methanol is used as the liquid fuel, and means a mixture gas of methanol vapor and water vapor when an aqueous methanol solution is used as the liquid fuel.

A resin frame 11 is laminated between the liquid-gas separating membrane 10 and the anode conductive layer 7b. The space enclosed by the frame 11 functions as a gasified fuel receiver 12 (so-called vapor reservoir) for temporarily receiving the gasified fuel diffused through the gas-liquid separating membrane 10. It is avoidable that a large amount of fuel is supplied to the anode catalyst layer 3 at a time, by the gasified fuel receiver 12 and liquid-gas separating membrane 10 which limit to the amount of methanol to be transmitted. It is therefore possible to limit the generation of methanol crossover. The frame 11 is a rectangular frame and is formed of a thermoplastic polyester resin such as PET.

In the meantime, a moisture retentive plate 13 is laminated on the cathode conductive layer 7a laminated on the membrane electrode assembly 1. A cover 15 provided with a plurality of air introduction ports 14 that introduce air which is an oxidizer is laminated on the moisture retentive plate 13. Because the cover 15 also serves to apply pressure to a stack including the membrane electrode assembly 1, thereby raising the adhesion of the stack, it is formed of a metal such as SUS304. The moisture retentive plate 13 serves to limit the evaporation of water produced in the cathode catalyst layer 2 and doubles as an auxiliary diffusing layer that accelerates the uniform diffusion of the oxidizer to the cathode catalyst layer 2 by introducing the oxidizer uniformly into the cathode gas diffusing layer 4.

The following descriptions are the details of the situation where a so-called generating reaction producing current (electron flow) occurs in a fuel cell having such a structure.

When the liquid fuel (for example, an aqueous methanol solution) in the liquid fuel tank 9 is gasified, gasified methanol and water are diffused through the gas-liquid separating membrane 10, received once in the gasified fuel receiver 12, and gradually diffused through the anode gas diffusing layer 5 from the receiver 12 and supplied to the anode catalyst layer 3, protons (H⁺; also called hydrogen ions) and electrons (e⁻) are produced by an oxidizing reaction shown in the following formula (1).

CH₃OH + H₂O → CO₂ + 6H⁺ + 6e⁻ (1)

When pure methanol is used as the liquid fuel, water is not supplied from the fuel gasifying means. Therefore, for example, water produced by an oxidizing reaction of methanol mingled into the cathode catalyst layer 2 and water contained in the proton conductive membrane 6 react with methanol, causing the oxidizing reaction given by the above formula (1) or an internal reforming reaction according to a reaction mechanism using no water which is not given by the above formula (1).

The protons generated in the anode catalyst layer 3 diffuse into the cathode catalyst layer 2 through the proton conductive membrane 6. Also, at the same time, the electrons generated in the anode catalyst layer 3 flow in an external circuit connected to the fuel cell, energize the load (resistor) of the external circuit and flow into the cathode catalyst layer 2.

The oxidizing gas such as air is introduced from the air introduction port 14 of the cover 15, diffuses through the moisture retentive plate 13, the cathode conductive layer 7a and the cathode gas diffusing layer 4 and is supplied to the cathode catalyst layer 2. The supplied oxidizing gas undergoes a reducing reaction with the above protons diffused through the proton conductive membrane 6 and the electrons supplied through the external circuit to produce a reaction product. When air is supplied to the cathode catalyst layer as the oxidizing gas, the reaction of oxygen contained in the air which occurs in the cathode catalyst layer is given by the following formula (2) and the reaction products in this case is water (H₂O).

O₂ + 4H⁺ + 4e⁻→ 2H₂O (2)

The reactions given by the formulae (1) and (2) occur simultaneously, whereby a generating reaction for a fuel cell is completed.

Along with the progress of the generating reaction, water produced in the cathode catalyst layer 2 by the reaction of the above formula (2) diffuses into the moisture retentive plate 13 through the cathode gas diffusing layer 4. As a result, evaporation of water is prevented by the moisture retentive plate 13, so that the amount of water retained in the cathode catalyst layer 2 increases. The water-diffusing portion 2a formed around the cathode catalyst layer 2 has a higher water absorption ability than the cathode catalyst layer 2 and therefore, water retained in the cathode catalyst layer 2 diffuses into the water-diffusing portion 2a. On the other hand, the anode is put into the situation where water vapor is supplied or not supplied at all through the gas-liquid separating membrane 10. As a result, along with the progress of a generating reaction, the amount of water kept in the cathode can be made larger than that in the anode. Therefore, water in the cathode catalyst layer 2 and water-diffusing portion 2a can be diffused through the proton conductive membrane 6 into the anode catalyst layer 3 by an osmosis phenomenon. Since water produced in the cathode catalyst layer 2 is supplied to the anode catalyst layer 3 by a capillary phenomenon, a plenty of water can be stably supplied to the anode catalyst layer 3 and the oxidizing reaction of methanol given by the foregoing formula (1) can be promoted.

Also, because a large part of water produced in the cathode catalyst layer 2 is absorbed in the water-diffusing portion 2a, the clogging of pores with water in the cathode catalyst layer 2 can be limited, thereby making it possible to well keep the diffusibility of the oxidizing gas in the cathode catalyst layer 2.

As a result, high output performance can be maintained for a long time.

Moreover, a sufficient amount of water can be continuously supplied to the anode catalyst layer 3, and it is therefore possible to obtain high output performance also when an aqueous methanol solution having a concentration exceeding 50 mol% or pure methanol is used as the liquid fuel. Also, the liquid fuel tank can be made compact by the use of liquid fuel having a high concentration.

Examples of the catalyst contained in the cathode catalyst layer 2 and anode catalyst layer 3 may include single metals (for example, Pt, Ru, Rh, Ir, Os and Pd) of the platinum group elements and alloys containing the platinum group elements. It is preferable to use Pt-Ru having strong resistance to methanol and carbon monoxide as the anode catalyst. It is preferable to use platinum or an alloy of platinum and Co, Fe, Cr or the like as the cathode catalyst. However, the catalysts are not limited to these materials. Also, a supported catalyst using a conductive support such as a carbon material or unsupported catalyst may be used.

For example, porous carbon paper may be used in the cathode gas diffusing layer 4 and anode gas diffusing layer 5.

Examples of the proton conductive material constituting the proton conductive membrane 6 include, though not particularly limited to, fluororesins having a sulfonic acid group (for example, perfluorocarbonsulfonic acid), hydrocarbon-based resins having a sulfonic acid group, and inorganic materials such as tungstic acid and phosphorus wolframate.

The water-diffusing portion 2a may be formed from a porous material or proton conductive material. As the porous material, those having water absorbing ability are preferable. Examples of the porous materials having water absorbing ability may include nonwoven fabrics, woven fabrics, synthetic resin porous bodies and natural porous bodies. Examples of the fibers constituting nonwoven fabrics or woven fabrics may include synthetic fibers such as polyester, nylon and acryl, inorganic fibers such as glass, and natural fibers such as cotton, hair, silk and paper. Also, examples of the synthetic resin porous bodies may include foamed polyurethane, foamed polystyrene, porous polyethylene and porous polyester. Examples of the natural porous bodies may include a sponge. Also, it is possible to form the water-diffusing portion by applying a slurry or paste obtained by kneading a powder of an insulating material such as silicon dioxide or alumina with a resin solution to a base material (for example, a proton conductive membrane) and by drying the coating solution to solidify. On the other hand, examples of the proton conductive material include fluororesins having a sulfonic acid group (for example, perfluorocarbonsulfonic acid), hydrocarbon-based resins having a sulfonic acid group (for example, a sulfonated polyimide resin, sulfonated polyether ether ketone and styrenesulfonic acid polymer), and inorganic materials such as tungstic acid and phosphorus wolframate. In addition to these materials, materials obtained by impregnating porous base materials with these proton conductive materials may be used for the water-diffusing portion. The water-diffusing portion formed from proton conductive materials contains no catalyst unlike the cathode catalyst layer, and therefore has higher water absorbing ability than the cathode catalyst layer. In order to improve the diffusion of water in the anode catalyst layer 3, the proton conductive material is desirably the same type as the proton conductive material contained in the proton conductive membrane 6.

In the above FIGS. 1 and 2, an example has been explained in which the water-diffusing portion 2a is in contact with the peripheral part of the cathode catalyst layer 2. However, the form of the water-diffusing portion is not limited to this and, for example, the water-diffusing portion 2a may be surrounded by the cathode catalyst layer 2. A second embodiment of the present invention is shown in FIG. 3.

The surface of the proton conductive membrane 6 opposite to the surface on which the anode catalyst layer 3 is formed is studded with a plurality of water-diffusing portions 2b. Each cathode catalyst layer 2 is interposed between the water-diffusing portions 2b and surrounds the peripheral part of each water-diffusing portion 2b. As shown in FIG. 3, the water-diffusing portion 2b is dispersed in the cathode catalyst layer 2, whereby water generated in the cathode catalyst layer 2 is easily distributed into the water-diffusing portion 2b, making it possible to more improve the diffusibility of the oxidizing gas in the cathode catalyst layer 2.

In this case, if the water-diffusing portion 2a is formed on the peripheral part of the cathode catalyst layer 2 as shown in FIGS. 1 and 2, the method of producing an MEA can be simplified.

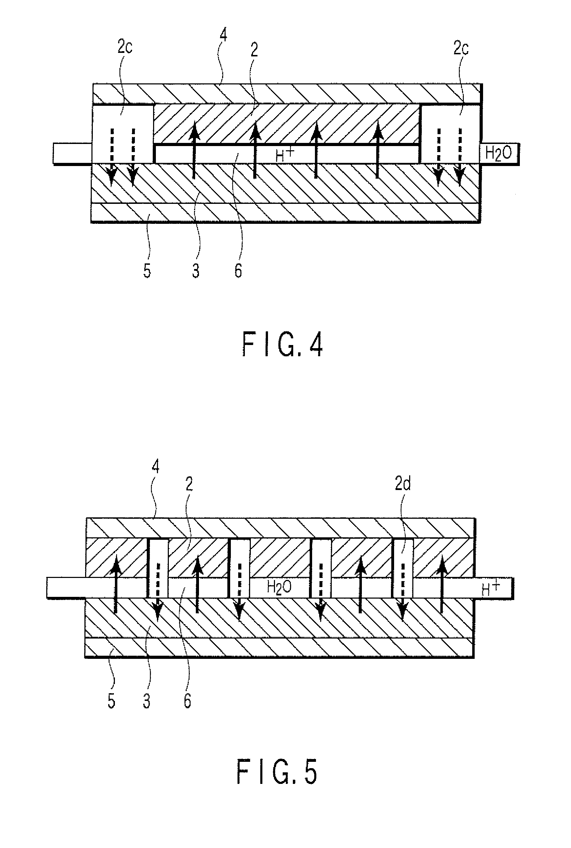

Also, at least a part of the water-diffusing portion preferably penetrates through the proton conductive membrane 6 and is in contact with the anode catalyst layer 3. This ensures that more sufficient water can be supplied to the anode catalyst layer 3. Third and fourth embodiments according to the present invention are shown in FIGS. 4 and 5, respectively.

FIG. 4 shows an example in which a water-diffusing portion 2c is formed frame-wise on the peripheral part of the cathode catalyst layer 2, wherein the end of the water-diffusing portion 2c penetrates through the proton conductive membrane 6 and is in contact with the anode catalyst layer 3.

FIG. 5 shows an example in which a plurality of water-diffusing portions 2d are made to exist dot-wise, wherein the end of the water-diffusing portion 2d penetrates through the proton conductive membrane 6 and is in contact with the anode catalyst layer 3.

In the foregoing first to fourth embodiments, water-diffusing portions having various forms have been shown. In any form, the ratio of the area of the water-diffusing portion to the area of the cathode catalyst layer 2 is preferably in the range of 1 to 50% when the area of the cathode catalyst layer 2 is 100%. This is based on the reason explained below. When the ratio of the area of the water-diffusing portion is less than 1%, the diffusibility of the oxidizing gas in the cathode catalyst layer 2 is reduced and there is therefore a fear that a drop in output when the power generation is continued for a long time is increased. When the ratio of the area of the water-diffusing portion exceeds 50%, there is the possibility that a high power output cannot be obtained. Here, the area of the water-diffusing portion means the area of the surface opposite to the surface facing the cathode gas-diffusing layer 4. Specifically, this area is that of the surface facing the proton conductive membrane 6 in the first and second embodiments and that of the surface facing the anode catalyst layer 3 in the third and fourth embodiments. The ratio of the area of the water-diffusing portion to the area of the cathode catalyst layer 2 is more preferably in the range of 3 to 30% when the area of the cathode catalyst layer 2 is 100%.

Explanations will be furnished as to an example of the method of producing an MEA to be used in each fuel cell of the first to fourth embodiments.

The case where the water-diffusing portion is formed using a solid porous material or a solid proton conductive material:

A porous material or a proton conductive material is made into a desired shape by cutting or punching to thereby obtain a water-diffusing portion. A cathode catalyst layer is cut or abraded into a shape corresponding to the water-diffusing portion. Alternatively, after a cathode gas-diffusing layer made of carbon paper is masked, a slurry is applied and dried, and then the gas-diffusing layer is unmasked to thereby obtain a cathode catalyst layer having a desired shape. After that, an anode is laminated on one surface of a proton conductive membrane and a cathode is laminated on the other surface in such a manner as to face the anode. Also, a water-diffusing portion is disposed on this other surface in such a manner as to be in contact with the cathode catalyst layer. The obtained laminate is subjected to a heating press to thereby obtain an MEA.

In this case, when the water-diffusing portion has such a shape enabling it to penetrate through the proton conductive membrane, there is a fear that simple lamination and pressing result in the formation of a clearance among members, so that gas can be blocked incompletely. It is therefore desired to adopt a solution casting method as will be mentioned below.

The case where a porous material or a proton conductive material which is to be the water-diffusing portion is formed by vaporizing a solvent (dispersion medium) in a solution to solidify:
(A) First, a solution (for example, a Nafion solution or alumina paste) as a precursor of the water-diffusing portion is applied to a desired place of the surface of an anode catalyst layer of an anode and a solvent is vaporized to solidify, thereby forming a water-diffusing portion. A proton conductive membrane is laminated on the surface of the anode catalyst layer and then, a cathode is laminated such that the cathode catalyst layer faces the anode catalyst layer through the proton conductive membrane. The water-diffusing portion is disposed on the surface of the proton conductive membrane in such a manner as to be adjacent to the cathode catalyst layer. The resulting laminate is subjected to a heating press to thereby obtain an MEA.
(B) First, a cathode provided with a cathode catalyst layer having a clearance in a desired place and a proton conductive membrane having a clearance in a desired place are prepared. After the proton conductive membrane is laminated on the surface of an anode catalyst layer of an anode, the cathode is laminated on the proton conductive membrane such that the clearance of the cathode catalyst layer is communicated with the clearance of the proton conductive membrane. Then, these members are integrated by pressing under heating. The solution of a precursor of a water-diffusing portion is cast into the clearances of the cathode catalyst layer and proton conductive membrane and a solvent is then vaporized to solidify, thereby forming a water-diffusing portion.
(C) After the above precursor solution is applied to the entire surface of a cathode catalyst layer, a proton conductive membrane and an anode are laminated thereon, which is then subjected to a heating press. As a result of this heating press, a part of the precursor solution applied to the surface sticks to the surrounding of the cathode catalyst layer and is then solidified, resulting in the formation of a water-diffusing portion surrounding the cathode catalyst layer. The solution left unstuck on the surface, which is the interface between the cathode catalyst layer and the proton conductive membrane, functions as an adhesive and therefore gives rise to no particular problem.

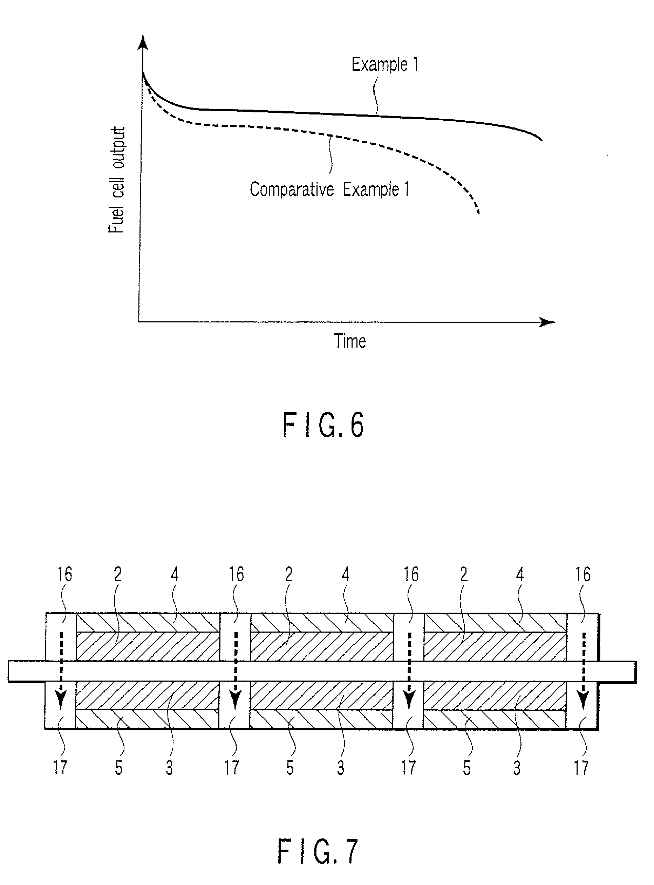

In the fuel cells of the foregoing first to fourth embodiments, a plurality of MEAs may be connected in series or in parallel. Also, the water-diffusing portion (called an anode water-diffusing portion) may be formed so as to be in contact with the anode catalyst layer. One example of a fuel cell of a fifth embodiment is shown in FIG. 7. In FIG. 7, a plurality of MEAs used in the first embodiment are connected in series.

As shown in FIG. 7, a plurality of cathodes including the cathode catalyst layer 2 and the cathode gas-diffusing layer 4 are arranged apart from each other on one surface of the proton conductive electrolyte membrane 6. Also, an anode including the anode catalyst layer 3 and the anode gas-diffusing layer 5 is arranged on the position corresponding to the cathode on the side opposite to the surface of the proton conductive membrane 6. A water-diffusing portion 16 is filled in the clearance between the cathodes on the proton conductive membrane 6 and also covers the peripheral part of the cathode.

In the fifth embodiment, a water-diffusing portion 17 is also formed on the anode. The water-diffusing portion 17 is filled in the clearance between the anodes on the proton conductive membrane 6 and also covers the peripheral part of the anode. Water diffused into the water-diffusing portion 16 from the cathode catalyst layer 2 moves to the anode water-diffusing portion 17 through the proton conductive membrane 6. Water retained in the anode water-diffusing portion 17 penetrates into the anode catalyst layer 3 by a capillary phenomenon. As a result, a sufficient amount of water can be supplied to the anode catalyst layer 3 and also, the clogging of the cathode catalyst layer 2 with water is limited, making it possible to maintain a high output for a long time.

In this case, a part or all of the water-diffusing portion 16 may penetrate through the proton conductive membrane 6 and be in contact with the anode water-diffusing portion 17. In this case, the water-diffusing portion 16 can supply water contained in the cathode catalyst layer 2 to the anode catalyst layer 3 not through the proton conductive membrane 6. Also, the water-diffusing portion 16 and the anode water-diffusing portion 17 may be formed using the same materials as those explained in the foregoing first embodiment.

Examples of the present invention will be explained in detail with reference to the drawings.

### (Example 1)

### <Production of anode catalyst layer>

A perfluorocarbonsulfonic acid solution having a concentration of 20% by weight and used as a proton conductive resin and water and methoxypropanol used as dispersion mediums were added in carbon black carrying anode catalyst particles (Pt : Ru = 1 : 1) and the above carbon black carrying catalyst particles were dispersed to prepare a paste. The resulting paste was applied to a porous carbon paper as an anode gas-diffusing layer to obtain an anode catalyst layer having a thickness of 100 µm.

### <Production of cathode catalyst layer>

A perfluorocarbonsulfonic acid solution having a concentration of 20% by weight and used as a proton conductive resin and water used as dispersion medium were added in carbon black carrying cathode catalyst particles (Pt) and the above carbon black carrying catalyst particles were dispersed to prepare a paste. The resulting paste was applied to a porous carbon paper as a cathode gas-diffusing layer to obtain a 3 cm × 4 cm cathode catalyst layer having a thickness of 100 µm.

### <Production of membrane electrode assembly (MEA)>

A 30-µm-thick perfluorocarbonsulfonic acid membrane (trade name: Nafion Membrane [registered trademark], manufactured by Du Pont) having a water content of 10 to 20% by weight was disposed as the proton conductive membrane between the anode catalyst layer and cathode catalyst layer produced in the above manner. A water-diffusing portion having the form of a 1-mm-wide rectangular frame and made of porous polyester (trade name: Univeks SB, manufactured by Unitika Ltd.) was disposed on the proton conductive membrane to enclose the periphery of the cathode catalyst layer. The size of the water-diffusing portion brought into contact with the proton conductive membrane was set to the values shown in the following Table 1 when the area of the cathode catalyst layer was defined as 100%. The obtained material was subjected to hot pressing to thereby obtain a membrane electrode assembly (MEA).

As a moisture retentive plate, a 500-µm-thick polyethylene porous film was prepared which had an air permeability of 2 sec/100 cm³ (measured by the measuring method prescribed in JIS P-8117) and a moisture permeability of 4000 g/m², 24h (by the measuring method prescribed in JIS L-1099 A-I).

As the frame, a 25-µm-thick polyethylene terephthalate (PET) film was used. Also, as the gas-liquid separating membrane, a 200-µm-thick silicone rubber sheet was prepared.

The obtained membrane electrode assembly was combined with the moisture retentive plate, the frame, the gas-liquid separating membrane and the fuel tank to fabricate an internal-gasifying-type direct-methanol fuel cell as shown in FIG. 1.

### (Example 2)

A direct-methanol fuel cell was fabricated in the same manner as in Example 1 except that, as shown in FIG. 3, 20 cylinder-like water-diffusing portions each having a diameter of 2 mm were made to exist dot-wise in a 3 cm × 4 cm cathode catalyst layer and the size of the surface of the water-diffusing portion which was in contact with the proton conductive membrane was set to that shown in Table 1.

### (Example 3)

A direct-methanol fuel cell was fabricated in the same manner as in Example 1 except that perfluorocarbonsulfonic acid was used in place of porous polyester to form a water-diffusing portion.

### (Example 4)

A direct-methanol fuel cell was fabricated in the same manner as in Example 2 except that perfluorocarbonsulfonic acid was used in place of porous polyester to form a water-diffusing portion.

### (Example 5)

A direct-methanol fuel cell was fabricated in the same manner as in Example 1 except that perfluorocarbonsulfonic acid was used in place of porous polyester to form a water-diffusing portion and, as shown in FIG. 4, the end of the water-diffusing portion was made to penetrate through the proton conductive membrane to bring the end into contact with the anode catalyst layer. In Table 1, the size (the area of the cathode catalyst layer was 100%) of the surface of the water-diffusing portion to be in contact with the anode catalyst layer is indicated as the ratio of the area of the water-diffusing portion.

### (Example 6)

A direct-methanol fuel cell was fabricated in the same manner as in Example 2 except that perfluorocarbonsulfonic acid was used in place of porous polyester to form a water-diffusing portion and, as shown in FIG. 5, the end of the water-diffusing portion was made to penetrate through the proton conductive membrane to bring the end into contact with the anode catalyst layer. In Table 1, the size (the area of the cathode catalyst layer was 100%) of the surface of the water-diffusing portion to be in contact with the anode catalyst layer is indicated as the ratio of the area of the water-diffusing portion.

### (Comparative Example 1)

A direct-methanol fuel cell was fabricated in the same manner as in Example 1 except that a clearance was formed at the place where the water-diffusing portion was to be formed.

### (Comparative Example 2)

A direct-methanol fuel cell was fabricated in the same manner as in Example 2 except that a clearance was formed at the place where the water-diffusing portion was to be formed.

In each fuel cell obtained in Examples 1 to 6 and Comparative Examples 1 and 2, pure methanol having a purity of 99.9% by weight was supplied to the fuel tank such that methanol vapor as the fuel was fed to the anode catalyst layer. When air was supplied to the cathode catalyst layer to generate electricity at ambient temperature under a constant current, a change in cell voltage with time was measured. Among these examples, the results of Example 1 and Comparative Example 1 are shown in FIG. 6 and the cell voltages (the cell voltage in the initial stage was 100%) in Examples 1 to 6 and Comparative Example 1 to 2 after a given time passed are shown in Table 1. In FIG. 6, the ordinate is the output of a fuel cell when cell voltage at constant current is indicated as a standard, and the abscissa is the generating time.

**Table 1**

| | Location of water-diffusing portion | Type of water-diffusing portion | Ratio of area of water-diffusing portion (%) | Ratio of output to initial output |
|---|---|---|---|---|
| Example 1 | Periphery | Porous polyester | 11% | 90% |
| Example 2 | Dot-wise | Porous polyester | 5% | 91% |
| Example 3 | Periphery | Perfluorocarbonsulfonic acid | 11% | 91% |
| Example 4 | Dot-wise | Perfluorocarbonsulfonic acid | 5% | 90% |
| Example 5 | Periphery and penetrated | Perfluorocarbonsulfonic acid | 11% | 92% |
| Example 6 | Dot-wise and penetrated | Perfluorocarbonsulfonic acid | 5% | 91% |
| Comparative Example 1 | Periphery | Clearance is formed | 11% | 69% |
| Comparative Example 2 | Dot-wise | Clearance is formed | 5% | 64% |

As is clear from FIG. 6 and Table 1, it is understood that each fuel cell obtained in Examples 1 to 6 provided with the water-diffusing portion is less reduced than each fuel cell obtained in Comparative Examples 1 and 2 provided with a clearance in place of the water-diffusing portion, in cell voltage when the generation of electricity is continued for a fixed time.

### (Example 7)

A direct-methanol fuel cell was fabricated in the same manner as in Example 1 except that the width of the water-diffusing portion was increased to 2.2 mm, the area of the cathode catalyst layer was decreased to 2.76 cm × 3.76 cm, and the size of the surface of the water-diffusing portion which was in contact with the proton conductive membrane was changed to 30% (the area of the cathode catalyst layer was 100%). The ratio of the output to initial output of the fuel cell was measured, to find that the ratio was 93%.

### (Example 8)

A direct-methanol fuel cell was fabricated in the same manner as in Example 1 except that the width of the water-diffusing portion was increased to 3.3 mm, the area of the cathode catalyst layer was decreased to 2.54 cm × 3.54 cm, and the size of the surface of the water-diffusing portion which was in contact with the proton conductive membrane was changed to 50% (the area of the cathode catalyst layer was 100%). The ratio of the output to initial output of the fuel cell was measured, to find that the ratio was 95%.

As shown in Examples 7 and 8, when the ratio of the area of the water-diffusing portion was increased to 30% or 50%, the ratio of the output to the initial output was more increased than that of Example 1. On the contrary, the initial outputs were 86 in the case of Example 7 and 75 in the case of Example 8 when the initial output of Example 1 was set to 100. Therefore, it is desirable that the ratio of the area of the water-diffusing portion to that of the cathode catalyst layer be 30% or less in order to improve both the initial output and the ratio of the output to the initial output.

The present invention is not limited to the aforementioned embodiments and the structural elements may be modified and embodied within the spirit of the invention in its practical stage. Appropriate combinations of a plurality of structural elements disclosed in the above embodiments enable the production of various inventions. For example, several structural elements may be deleted from all the structural elements shown in the embodiments. Also, the structural elements disclosed in different embodiments may be adequately combined.

## Claims

1. A fuel cell comprising:
a proton conductive membrane;
an anode catalyst layer provided on one surface of the proton conductive membrane; and
a cathode catalyst layer provided partly on another surface of the proton conductive membrane,
wherein water generated in the cathode catalyst layer is supplied to the anode catalyst layer through the proton conductive membrane, and
the fuel cell further comprises a water-diffusing portion which is provided on the another surface of the proton conductive membrane and is in contact with the cathode catalyst layer.

2. The fuel cell according to claim 1, wherein the water-diffusing portion is formed from a porous material or a proton conductive material.

3. The fuel cell according to claim 2, wherein the proton conductive material is the same type as a proton conductive material contained in the proton conductive membrane.

4. The fuel cell according to any one of claims 1 to 3, wherein at least a part of the water-diffusing portion is penetrated through the proton conductive membrane and is in contact with the anode catalyst layer.

5. The fuel cell according to any one of claims 1 to 3, wherein the water-diffusing portion is in contact with a periphery of the cathode catalyst layer.

6. The fuel cell according to any one of claims 1 to 3, wherein the cathode catalyst layer encloses the water-diffusing portion.

7. The fuel cell according to any one of claims 1 to 3, wherein the water-diffusing portion exists dot-wise on the another surface of the proton conductive membrane.

8. The fuel cell according to claim 1, wherein a ratio of an area of the water-diffusing portion is 1 to 50% when an area of the cathode catalyst layer is 100%.

9. The fuel cell according to claim 1, wherein a ratio of an area of the water-diffusing portion is 3 to 30% when an area of the cathode catalyst layer is 100%.

10. A fuel cell comprising:
a proton conductive membrane;
an anode catalyst layer provided on one surface of the proton conductive membrane;
a cathode catalyst layer which is provided on another surface of the proton conductive membrane and faces the anode catalyst layer through the proton conductive membrane; and
a water-diffusing portion which is provided on the another surface of the proton conductive membrane and is in contact with the cathode catalyst layer, and the water-diffusing portion supplying water generated in the cathode catalyst layer to the anode catalyst layer through the proton conductive membrane.

11. The fuel cell according to claim 10, wherein the water-diffusing portion faces the anode catalyst layer through the proton conductive membrane.

12. The fuel cell according to claim 10, further comprising an anode water-diffusing portion which is provided on the one surface of the proton conductive membrane and is in contact with the anode catalyst layer, wherein the water-diffusing portion faces the anode water-diffusing portion through the proton conductive membrane.

13. The fuel cell according to claim 11, wherein the water-diffusing portion is in contact with a periphery of the cathode catalyst layer.

14. The fuel cell according to claim 11, wherein the cathode catalyst layer encloses the water-diffusing portion.

15. The fuel cell according to claim 11, wherein the water-diffusing portion exists dot-wise on the another surface of the proton conductive membrane.

16. A fuel cell comprising:
a proton conductive membrane;
an anode catalyst layer provided on one surface of the proton conductive membrane;
a cathode catalyst layer which is provided on another surface of the proton conductive membrane and faces the anode catalyst layer through the proton conductive membrane; and
a water-diffusing portion which is in contact with the cathode catalyst layer and penetrates through the proton conductive membrane, and the water-diffusing portion supplying water generated in the cathode catalyst layer to the anode catalyst layer.

17. The fuel cell according to claim 16, wherein the water-diffusing portion is in contact with the anode catalyst layer.

18. The fuel cell according to claim 16, further comprising an anode water-diffusing portion being in contact with the anode catalyst layer, wherein the water-diffusing portion is in contact with the anode water-diffusing portion.

19. The fuel cell according to claim 16, wherein the water-diffusing portion is in contact with a periphery of the cathode catalyst layer.

20. The fuel cell according to claim 16, wherein the cathode catalyst layer encloses the water-diffusing portion.
